# EUROPEAN PATENT SPECIFICATION

(11) **EP 0 832 333 B1**
(45) Date of publication and mention of the grant of the patent: **31.03.2004**
(21) Application number: 96918934.9
(22) Date of filing: 11.06.1996
(51) Int. Cl.: E04B 1/94

(54) **HIGH TEMPERATURE RESISTANT INSULATING ELEMENT**
GEGEN HOHE TEMPERATUREN BESTÄNDIGES ISOLATIONSELEMENT
ELEMENT ISOLANT RESISTANT AUX HAUTES TEMPERATURES

(30) Priority: 12.06.1995 NO 952312
(43) Date of publication of application: 01.04.1998
(73) Proprietor: KAEFER Isoliertechnik GmbH & Co. KG, 28195 Bremen (DE)
(72) Inventor: NILSEN, Tore, Myhr, N-5050 Nesttun (NO)
(74) Representative: von Ahsen, Erwin-Detlef, Dipl.-Ing.
(86) International application number: PCT/NO1996/000140
(87) International publication number: WO 1996/041924

(56) References cited:
- CH-A- 544 197
- DE-A- 2 650 915
- DE-A- 2 839 499
- DE-C- 2 830 973

## Description

The invention concerns a high temperature resistant insulating element. In many technical installations it is necessary to employ insulation in order to prevent heat stress or to secure the installation or buildings against fire. This applies especially to installations used on ships and other offshore installations, where classification requirements exist with regard to insulation solutions, e.g. in connection with engine rooms, escape routes, etc.

In the case of this kind of insulation it is a requirement that the insulating material should be able to withstand high temperatures over a long period without the structure located behind it becoming too hot. In this context it is important that there should be no holes in the insulation and the traditional solution which has been employed in laying the insulation is to affix mats along floor, ceiling and wall surfaces and to lay the mats around siffeners, beams, etc., which has been a cumbersome process with substantial consumption of material.

In Norwegian patent application no. 94 2559 a new technique is described for laying such high temperature resistant insulation, wherein profiles are used in which insulating elements can be laid and secured. In order to be able to employ this method the elements must have a certain degree of rigidity. For this purpose rockwool plates have mainly been used, which satisfy the requirements for both heat resistance and rigidity.

A disadvantage with this process, however, has been that rockwool is relatively heavy and the weight can be important when insulating large spaces, particularly also in connection with the insulation of roof structures or cellar deck structures and bulkheads with stiffeners. Moreover the mineral wool plates or the mats have required to be of a certain thickness in order to be able to satisfy the requirements regarding temperature resistance. An example of such requirements is the so-called Solas regulations and the classification societies' requirements for certified insulation solutions, e.g. A60.

From DE 2 830 973 is known holster or housing made up of a fire insulating material which is held in a compressed state by wire retainers. In case of a fire, the wire retainers will melt and the insulating material expan to protect the interior of the housing from the heat. The insulating material may consist of several layers, where the inner layer is glass woold and the outer layer a ceramic fibre. The outer layer of the isolation material is attach to the inner layer by the wire retainers which melt in case of fire. Thus, this isolation material is therefore not suited for employment where self supporting isolation is required.

The object of the present invention is to provide an insulating element which will be capable of satisfying the above-mentioned conditions, i.e. the requirements which are placed on such heat insulation materials, while at the same time the element should have such a degree of rigidity that it can easily be installed as described in the above-mentioned Norwegian patent application, and where in addition the element should have as low a weight as possible.

This object is achieved with an element which is characterized by the features presented in the patent claims.

The element according to the invention is based on the use of a ceramic fibre material which should be placed against the hot side. Such a ceramic fibre material has very good heat insulating properties at high temperatures (1000°C), but has the disadvantage that the fibre material is very loose and can be compared with cotton wool, i.e. the material has no intrinsic rigidity and will not be able to be employed as a self-supporting element. According to the invention an extremely loose mat of this kind is used as a layer in a laminate together with a layer which provides a certain degree of rigidity and further insulation, i.e. a layer of an inorganic fibre-like material. These layers are held together by means of a suitable adhesive, e.g. water glass, silicate glue or a cement glue. It has been surprisingly demonstrated that this layer of adhesive acts as a kind of third stiffening layer or layer in the laminate, thus providing the thereby formed element with sufficient rigidity. The elements can thereby be mounted in profiles in the desired manner as self-supporting units. Due to the very good heat insulating properties of the ceramic fibre material the mat can be made less thick than a mineral wool mat. The ceramic fibre material has the additional advantage that it is lighter, thus achieving a weight saving. Together with this ceramic fibre layer, it is advantageous to employ, e.g., a glass wool plate. Glass wool material, as it is used in insulating mats, does not possess sufficient heat resistance, and the material will melt in the temperature range around approximately 600-700°C. An important advantage of glass wool is that it is considerably lighter than both ceramic fibre and mineral wool (e.g. 60 kg/m against 100-110). Glass wool is also substantially cheaper than ceramic fibre material. A combination of a glass wool plate of this kind with the ceramic fibre material provides a desired temperature gradient through the insulating material, thus satisfying the classification requirements and the above-mentioned standard. The adhesive employed must, of course, be able to withstand temperatures which occur in the interface between the layers. An advantageous adhesive is glue of water glass, but other types of adhesive can also be used, e.g. a cement glue. In fire tests the described material combination demonstrates surprisingly good properties in the end joints between the elements which are placed edge to edge without adhesive connection.

The advantages which are obtained with the insulating element according to the invention are that it is extremely fireproof, it has intrinsic rigidity which may partly come from one of the laminate layers, but also to a great extent from the adhesive bond, the element will be very light and reasonable to purchase, especially in comparison with what a mat of purely ceramic material will cost. The rigidity of the mat or plate is important in connection with installation and securing at the user location. In principle the element according to the invention can be used anywhere, but will be particularly advantageous, e.g., in connection with speedboats or in other locations where the weight is critical.

Instead of using a glass wool mat together with the ceramic fibre wool, a rockwool mat, e.g., or a mat of another non-inflammable, inorganic material with sufficient rigidity can, of course, also be used.

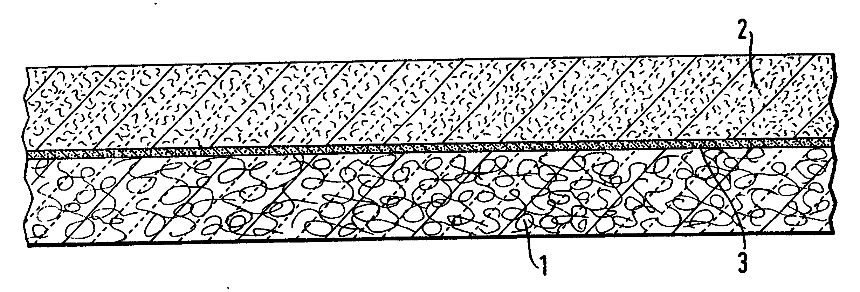

The invention will now be described in more detail by means of an embodiment which is illustrated in the drawing, which illustrates purely schematically a section through two embodiments of the element according to the invention.

The drawing illustrates in a purely schematic manner a section through an element according to the invention, where the reference numeral 1 indicates a layer, e.g. with a thickness of 2.5 cm of a ceramic fibre material. This layer has a cotton wol-like consistency, and thus has no load-carrying capacity. The layer 1 is connected to a layer of an inorganic fibre material, in the example shown of a glass wool element 2 also with a thickness of 2.5 cm. These two layers are joined together by a layer of adhesive of, e.g., water glass, silicate glue or a cement glue, which are designated by 3 in the drawing. The glue can be applied to one or both interfaces in order to provide a good and through-going layer of adhesive which securely joins the whole surface. After hardening, this layer of adhesive will form a rigid intermediate layer which provides the entire element structure with better rigidity. An element as illustrated in the drawing with a thickness of approximately 5 cm will satisfy the above-mentioned A60 standard.

Many modifications will be possible within the scope of the invention. In the embodiment a version is described comprising only two layers with intermediate adhesive layer, but in some special cases the use may be envisaged of an element consisting of more than two layers, if a graduated rigidity is required in the insulation, thus enabling several layers to be employed, e.g. with different unit weight in the fibre layers. This will also involve the use of more layers of adhesive, which provides further rigidity to the element structure.

## Claims

1. A high temperature resistant insulating element comprising a laminate of at least one layer (1) of ceramic material and at least one layer (2) of a heat-resistant inorganic material, preferably a glass wool or mineral fibre wool, **characterised in that** the layers (1, 2) are glued together with a heat-resistant adhesive (3) which forms at least one rigid intermediate layer resulting in an element having a desired rigidity.

2. The insulating element of claim 1, **characterised in that** water glass, a silicate glue or a cement-based glue are used as an adhesive (3).

3. The insulating element of claim 1, **characterised in that** a semi-rigid plate is used as the inorganic layer (2).

4. The insulating element of claim 1, **characterised in that** the layer (1) on the hot (fire) side of the element has a thickness prevents the temperature in the area around the adhesive layer (3) from exceeding a temperature corresponding to the melting temperature of the subsequent layer (2) under conditions according to A60 standard.

## Patentansprüche

1. Hoch wärmebeständiges Isolierelement, welches ein Laminat aus mindestens einer Schicht (1) aus keramischem Material und mindestens eine Schicht (2) aus einem wärmebeständigen anorganischen Material aufweist, vorzugsweise aus Glaswolle oder Mineralfaserwolle, **dadurch gekennzeichnet, dass** die Schichten (1, 2) mittels eines wärmebeständigen Klebstoffs (3) an einander geklebt sind, welcher mindestens eine starre Zwischenschicht bildet, die zu einem Element mit der gewünschten Steifigkeit führt.

2. Das Isolierelement nach Anspruch 1, **dadurch gekennzeichnet, dass** Wasserglas, ein Silikatklebstoff oder ein Klebstoff auf Zementbasis als Klebstoff (3) verwendet werden.

3. Das Isolierelement nach Anspruch 1, **dadurch gekennzeichnet, dass** eine halbsteife Platte als anorganische Schicht (2) eingesetzt wird.

4. Das Isolierelement nach Anspruch 1, **dadurch gekennzeichnet, dass** die auf der heißen Seite (Feuerseite) des Elements liegende Schicht (1) eine Dicke aufweist, welche einen Anstieg der Temperatur im Bereich um die Schicht (3) auf einen Wert verhindert, der den Wert einer Temperatur übersteigt, welche der Schmelztemperatur der folgenden Schicht (2) unter den Bedingungen gemäß der Norm A60 entspricht.

## Revendications

1. Elément isolant à résistance thermique aux hautes températures, compreriant un groupe laminée à au moins une couche (1) en matériau céramique et au moins une couche (2) en un matériau inorganique à résistance thermique, de préférence en laine de verre ou en laine de fibres minérales, **caractérisé en ce que** lesdites couches (1, 2) sont collées l'une à l'autre moyennant un adhésif à résistance thermique (3), qui constitue au moine une couche intermédiaire rigide, qui résulte en un élément à rigidité souhaitée.

2. L'élément isolant selon la revendication 1, **caractérisé en ce que** de verre soluble, un adhésif à silicate ou un adhésive à la base de ciment sont utilisés en tant que ledit adhésif 83).

3. L'élément isolant selon la revendication 1, **caractérisé en ce qu'**un plateau semi-rigide est utilisé en tant que ladite couche inorganique 82).

4. L'élément isolant selon la revendication 1, **caractérisé en ce que** ladite (couche) du côté chaud (côté de feu) de l'élément a une épaisseur, qui empêche un accroissement de la température dans la zone autour de ladite couche (3) à un niveau dépassant une température, qui correspond à la température de fusion de la couche suivante (2) aux conditions selon le standard A60.
